# EUROPEAN PATENT APPLICATION

(11) **EP 2 737 986 A1**
(43) Date of publication of application: **04.06.2014**
(21) Application number: 13194741.8
(22) Date of filing: 28.11.2013
(51) Int. Cl.: B29C 35/10, B29C 35/08

(54) **Production method of photoreaction product sheet and apparatus for the same**

(30) Priority: 29.11.2012 JP 2012260927
(71) Applicant: NITTO DENKO CORPORATION, Osaka 567 (JP)
(72) Inventor: Akiyama, Jun, Ibaraki-shi, Osaka 567-8680 (JP); Nakashima, Tooru, Ibaraki-shi, Osaka 567-8680 (JP)
(74) Representative: Grünecker, Kinkeldey, Stockmair & Schwanhäusser

(57) **Abstract**

The present invention relates to a method in which: a photoreactive composition layer (4) is formed on a support (1) while conveying the support (1) in one direction, the support (1) is turned around at least once so that the support before turnaround (16 faces the support after turnaround (16) by conveying the support (1) in the direction opposite the foregoing one direction to make a conveying route of the support multistage traveling, and in the course of multistage traveling, the support (1) is turned around while keeping contact with three or more conveying rollers (16a, 16b, 16c) at least during the first turnaround (16), and light is emitted toward the support from a light irradiator (20) to cause photopolymerization of the photoreactive composition layer (4) formed on the support (1).

## Description

### TECHNICAL FIELD

The present invention relates to a production method of a photoreaction product sheet, containing irradiating a photoreactive composition layer formed on a sheet-shaped, tape-shaped or film-shaped support with light to cause a photoreaction of the photoreactive composition layer to obtain a photoreaction product layer; and an apparatus for the same.

### BACKGROUND ART

Conventionally, there is known a method for producing a photoreaction product sheet by coating a photoreactive composition layer to an appropriate thickness on a support such as film-shaped support and reacting (polymerizing) the coated photoreactive composition layer by the irradiation with light to form a photoreaction product layer. Examples of the photoreaction product sheet includes a pressure-sensitive adhesive sheet where the photoreactive composition layer is a photopolymerizable composition layer and a pressure-sensitive adhesive layer is formed by polymerizing the formed photoreactive composition layer by the irradiation with light, as well as a base material, a film and a sheet, which are formed as the support above for an adhesive sheet or the like by causing a crosslinking reaction of a photoreaction composition by light to effect gelling.

Such production is performed by unrolling and feeding a support, coating a photoreactive composition layer thereon while moving the support, irradiating the coated support with light, and rolling up the irradiated support.

A photoreactive composition is photopolymerized while changing the intensity of an ultraviolet ray irradiating an ultraviolet-curable sheet in a stepwise fashion, thereby adjusting the conversion, For example, a photoreactive composition is polymerized in a given amount by the irradiation with an ultraviolet ray at a predetermined illuminance in a first step, and irradiation with an ultraviolet ray at a higher illuminance than in the first step is performed in a second step, whereby the conversion of the ultraviolet-curable sheet is raised (see, Patent Documents 1 to 3).

In another method, an ultraviolet-curable sheet is irradiated with an ultraviolet ray at a predetermined illuminance to polymerize a photoreactive composition in a given amount in a first step, and irradiation with an ultraviolet ray at a lower illuminance than in the first step is performed in a second step, whereby the production rate is enhanced while raising the conversion of the ultraviolet-curable sheet (see, Patent Document 4).

As still another method, there is disclosed method for efficiently utilizing light used for ultraviolet polymerization, where a photoreaction product sheet is conveyed between ultraviolet ray generating lamps linearly aligned to stagger the upper and lower lamps as shown in Fig. 8, or is reciprocated therebetween a plurality of times (see, Patent Document 5).
Patent Document 1: JP-A-2-60981
Patent Document 2: JP-A-6-504809
Patent Document 3: JP-A-7-331198
Patent Document 4: JP-A-3-285974
Patent Document 5: JP-A-2003-145012

### SUMMARY OF THE INVENTION

However, the conventional methods have the following problems.

In the method of changing the irradiation with an ultraviolet ray in a stepwise fashion used in Patent Documents 1 to 4, a plurality of kinds of lamps differing in the intensity need to be disposed on a line. Accordingly, not only the production line becomes long but also there occurs an inconvenience that a plurality of kinds of irradiation units must be installed.

Furthermore, in the method used in Patent Document 5, a folding crease may occur during the turnaround when the photoreaction product sheet is turned around. That is, there is a problem that the produced photoreaction product sheet may be dealt with as an appearance failure due to the folding crease.

The present invention has been made under these circumstances, and an object of the present invention is to provide a production method of a photoreaction product sheet, where even as the apparatus configuration is simplified, a high-quality photoreaction product sheet can be efficiently produced; and an apparatus for the same.

As a result of intensive studies made by repeating experiments to ascertain the cause of an appearance failure of a photoreaction product sheet due to a folding crease, the present inventors have found the followings.

That is, a photopolymerization reaction of the photoreaction product coated on the photoreaction product sheet is not promoted, and the composition falls short of reaching a predetermined reaction ratio (conversion). It has been found that when the support in such a state is wound on a conveying roller and turned around, because of lack in the elastic force of the photoreaction product failing to reach a predetermined viscosity, a folding crease occurs in the photoreaction product sheet during the turnaround on a conveying roller. In particular, when a photoreaction product sheet is wound on one conveying roller, the contact area is large and therefore, the tension during the turnaround is considered to be distributed throughout the contact surface. However, it has been also found that a folding crease occurs due to the effect of friction and tension generated by the conveying roller when turning around the photoreaction product sheet.

Accordingly, in order to attain the above-described object, the present invention has the following configuration.

That is, the present invention provides a method for producing a photoreaction product sheet, containing irradiating a photoreactive composition layer formed on a support with light emitted from a light irradiator to cause a reaction of the photoreactive composition layer, to thereby obtain a photoreaction product layer, in which:
the photoreactive composition layer is a photopolymerizable composition layer having a light transparency, which is photopolymerized by light emitted from the light irradiator to provide a pressure-sensitive adhesive layer,
the photoreactive composition layer is formed on the support while conveying the support in one direction,
the support is turned around at least once so that the support before turnaround faces the support after turnaround by conveying the support in the direction opposite the foregoing one direction to make a conveying route of the support multistage traveling, and in the course of multistage traveling, the support is turned around while keeping contact with three or more conveying rollers at least during the first turnaround, and
light is emitted toward the support from the light irradiator to cause photopolymerization of the photoreactive composition layer formed on the support.

According to the method above, the support is turned around while keeping contact with three or more conveying rollers and therefore, the contact area of the support with an individual conveying roller becomes small. That is, not only the frictional resistance between an individual conveying roller and the support is reduced during the turnaround, but also the tension acting on the support is distributed to respective conveying rollers. Accordingly, even when the photopolymerization reaction of the photoreaction product layer is not promoted and the viscosity thereof is still low, the support can avoid causing a folding crease during its turnaround.

Incidentally, in the method above, the contact area of the support with a conveying roller can be reduced, for example, by the following methods.

First, in each conveying roller group consisting of a set of three conveying rollers aligned along the conveying direction of the support, the central roller among the three conveying rollers is taken as a basis conveying roller, and
the inward angle formed by connecting the axial core of each of conveying rollers deployed before and after the basis conveying roller and the axial core of the basis conveying roller with a straight line may be set to be from 90° to less than 180°.

Second, the diameter of the conveying roller may be set to be 300 mm or less. Here, the conveying rollers are not limited to a combination of conveying rollers having the same diameter, and conveying rollers having different diameters may be also combined.

Incidentally, in the method above, it is preferred that the support has a light transparency and in the course of emitting light toward the support from the light irradiator, the photoreactive composition layer formed on the support as well as the support transmit light to cause photopolymerization of all photoreactive composition layers on the multistaged supports.

According to this method, light emitted toward supports having formed thereon a photoreactive composition layer and being conveyed along a serpentine course to establish multistaging photopolymerizes all photoreactive compositions on the supports as it penetrates the supports and the photoreactive composition layers. Therefore, light emitted from one direction can be effectively utilized and in turn, a photoreaction product sheet can be efficiently produced by reducing the number of light irradiators such as lamp.

Also, in the method above, the photoreactive composition layer formed on a light-transmitting release liner may be laminated onto the support, and light may be emitted toward the support in a state that the photoreactive composition layer is still covered with the light-transmitting release liner, to cause photopolymerization of the photoreactive composition layer.

According to this method, the light transmitted through the light-transmitting release liner directly acts on the photoreactive composition layer and, on the other hand, an unreacted photoreactive composition is shielded by the light-transmitting release liner, so that the unreacted photoreactive composition can be prevented from contaminating the light irradiator or reducing the illuminance of light. In particular, in the case where the photoreactive composition layer is a photopolymerizable composition layer capable of being photopolymerized by light emitted from a light irradiator to provide a pressure-sensitive adhesive layer, an unreacted monomer evaporates along with a photoreaction (photopolymerization) of the photopolymerizable composition layer, but this monomer is shielded by the light-transmitting release liner and attaches thereto, so that the monomer can be prevented from contaminating the light irradiator or reducing the illuminance of light. Also, at the time of separating the light-transmitting release liner from the pressure-sensitive adhesive layer, only the light-transmitting release liner is stripped in the state of the pressure-sensitive adhesive layer being provided on the support.

In the case where a photoreactive composition layer is formed on a support through such a light-transmitting release liner and a photoreaction product layer resulting from a photoreaction of the photoreactive composition is formed on the support to obtain a reaction product sheet, the reaction ratio in the reaction induced by light of the photoreactive composition layer is preferably set to 20% or more so as to prevent an unreacted photoreactive composition from spreading out of the light-transmitting release liner at the time of first turning around the support

Also, in order to attain the above-described object, this invention has the following configuration.

That is, the present invention provides an apparatus for producing a photoreaction product sheet by irradiating a photoreactive composition layer formed on a support with light emitted from a light irradiator to cause a reaction of the photoreactive composition layer, to thereby obtain a photoreaction product layer, in which:
the photoreactive composition layer is a photopolymerizable composition layer capable of being photopolymerized by light emitted from the light irradiator to provide a pressure-sensitive adhesive layer, and
the apparatus contains:
   a coater of coating a photoreactive composition layer on a support having a light transparency while conveying the support in one direction,
   a turnaround mechanism of turning around the support by three or more conveying rollers to convey the support in the direction opposite the foregoing one direction by making a turnaround at least once, and
   an irradiator of emitting light on the support that is turned around and conveyed along a serpentine course to establish multistaging.

In the above apparatus, it is preferred that the support has a light transparency, and the light irradiator emits light toward the support from outside of at least one of the uppermost stage and the downmost stage of the support that is turned around and conveyed along a serpentine course to establish multistaging.

According to this configuration, the above-described method can be suitably implemented.

According to the production method of a photoreaction product sheet and the apparatus for the same of the present invention, a support is turned around while keeping contact with three or more conveying rollers, so that the friction with an individual conveying roller can be reduced and at the same time, the tension acting on the contact site with a conveying roller during the turnaround can be distributed to respective conveying rollers. In turn, occurrence of a folding crease due to winding of the support on a single conveying roller as in the conventional apparatus can be suppressed.

Also, a support having formed thereon a photoreactive composition and being conveyed along a serpentine course to establish multistaging is irradiated with light to photopolymerize the photoreactive composition, so that the number of light irradiators such as lamp and fluorescent tube can be reduced. In other words, even as the apparatus configuration is simplified, a high-quality photoreaction product sheet can be efficiently produced.

### BRIEF DESCRIPTION OF THE DRAWINGS

[FIG. 1] FIG. 1 is a front view illustrating a schematic configuration of the production apparatus of a photoreaction product sheet.
[FIG. 2] FIG. 2 is a front view illustrating a configuration of the conveying roller group.
[FIG. 3] FIG 3 is a front view illustrating a schematic configuration of the production apparatus of second embodiment.
[FIG. 4] FIG. 4 is a front view illustrating a configuration of the conveying roller group in the production apparatus of Specific Examples 3-4.
[FIG. 5] FIG. 5 is a front view illustrating a configuration of the conveying roller group in the production apparatus of a modified embodiment.
[FIG. 6] FIG 6 is a front view illustrating a configuration of the conveying roller group in the production apparatus of a modified embodiment.
[FIG. 7] FIG. 7 is a front view illustrating a schematic configuration of the conventional apparatus (Comparative Example 1).
[FIG. 8] FIG. 8 is a front view illustrating a schematic configuration of the conventional apparatus (Comparative Examples 2-4).
[FIG. 9] FIG. 9 is a front view illustrating a schematic configuration of the apparatus of Comparative Example 5.

### MODE FOR CARRYING OUT THE INVENTION

Embodiments of the present invention are described below by referring to the drawings. Incidentally, in the present application, the phrase "having a light transparency" means that its transmittance in the wavelength range of from 320 nm to 400 nm is 50% or more.

### <First Embodiment>

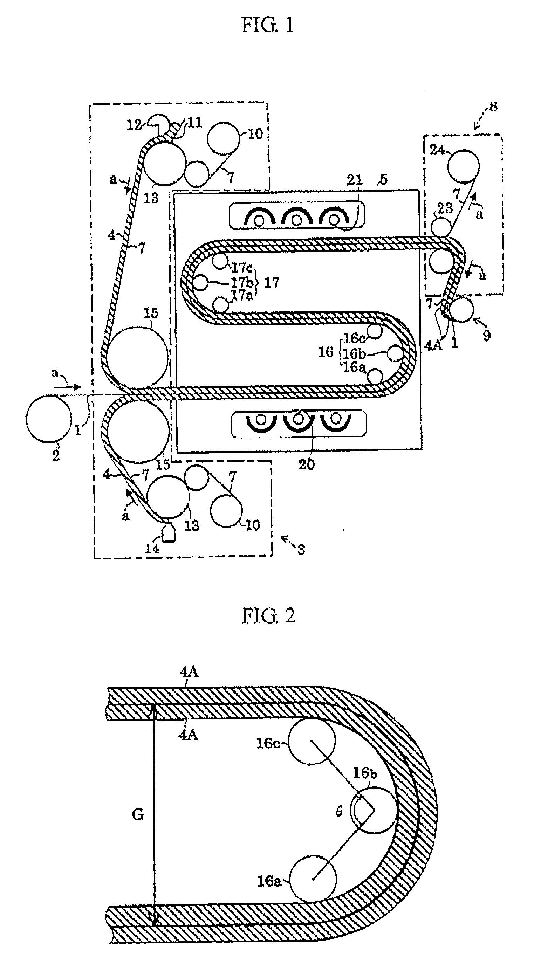

The production apparatus of a photoreaction product sheet according to this Embodiment consists of, as shown in Fig. 1, a support feed roll 2 of unrolling and feeding a sheet-shaped, tape-shaped or film-shaped support (base material) 1; a coating section 3 of applying (coating) a photopolymerizable composition (hereinafter, sometimes referred to as "photopolymerizable composition 4") to a predetermined thickness so as to form a photopolymerizable composition layer 4 on the support I unrolled from the support feed roll 2; a first irradiation chamber 5 of irradiating the photopolymerizable composition 4 applied to the support 1 with light; a separation section 8 of separating the later-described light-transmitting release liner 7 from the laminate of the support 1 and a pressure-sensitive adhesive layer 4A formed thereon, obtained from the photopolymerizable composition layer 4 by a photopolymerization reaction in the course of being conveyed in the first irradiation chamber 5; and a support take-up section 9 of rolling up the support 1 having provided thereon the pressure-sensitive adhesive layer 4A. The configuration of each section is described in detail below. Incidentally, the photopolymerizable composition 4 corresponds to the photoreactive composition of the present invention.

A belt-shaped support 1 wound around a support feed roll 2 is made of a material having a light transparency. For example, a plastic film such as polyester film is used for the support 1.

The photopolymerizable composition 4 has a light transparency, even as containing a monomer or partially polymerized product thereof and a photopolymerization initiator, and can be polymerized by the irradiation with light to become a pressure-sensitive adhesive. As for this photopolymerizable composition, for example, acrylic, polyester or epoxy photopolymerizable compositions can be used. Among these, an acrylic photopolymerizable composition is preferably used. Each component of the photopolymerizable composition used in this Embodiment is exemplified below.

In this Embodiment, a monomer containing an alkyl acrylate monomer as the main component and a polar group-containing copolymerizable monomer may be used in the photopolymerizable composition. The alkyl acrylate monomer used in this Embodiment is a vinyl monomer containing an alkyl (meth)acrylate ester as a main component, and specific examples thereof include monomers containing, as the main component, one member or two or more members selected from those containing an alkyl group having a carbon number of I to 14, for example, an alkyl acrylate or methacrylate ester containing an alkyl group such as methyl group, ethyl group, propyl group, butyl group, isobutyl group, pentyl group, isopentyl group, hexyl group, heptyl group, octyl group, isooctyl group, nonyl group, isononyl group, decyl group and isodecyl group, and those in which the alkyl group is partially substituted with a hydroxyl group.

As the polar group-containing copolymerizable monomer, for example, an unsaturated acid such as (meth)acrylic acid, itaconic acid and 2-acrylamidopropanesulfonic acid, a hydroxyl group-containing monomer such as 2-hydroxyethyl (meth)acrylate and 2-hydroxypropyl (meth)acrylate, and a caprolactone (meth)acrylate are used. In addition, not only a monomer but also a dimer such as (meth)acrylic acid dimer may be used.

As for the use ratio between the monomer containing an alkyl acrylate monomer as the main component and the polar group-containing copolymerizable monomer, it is preferred that the former is from 70 to 99 wt% and the latter is from 30 to 1 wt%; and particularly preferably, the former is from 80 to 96 wt% and the latter is from 20 to 4 wt%. By using the monomers in such a range, the adhesiveness, cohesive force and the like can be properly balanced.

The photopolymerization initiator used in this Embodiment includes, for example, benzoin ethers such as benzoin methyl ether and benzoin isopropyl ether; substituted benzoin ethers such as anisole methyl ether; substituted acetophenones such as 2,2-diethoxyacetophenone and 2,2-dimethoxy-2-phenylacetophenone; substituted α-ketols such as 2-methyl-2-hydroxy propiophenone; aromatic sulfonyl chlorides such as 2-naphthalene-sulfonyl chloride; and photoactive oximes such as I-phenyl-1,1-propanedione-2-(o-ethoxycarbonyl)-oxime. Usually, the use amount of such a photopolymerization initiator is preferably 0.01 to 5 parts by weight, and more preferably from 0.1 to 3 parts by weight, per 100 parts by weight of the total of the monomer containing an alkyl acrylate monomer as the main component and the polar group-containing copolymerizable monomer. If the amount of the photopolymerization initiator used is less than this range, the polymerization rate may be decreased, and a large amount of a monomer is liable to remain unreacted, which is not preferred from an industrial viewpoint, whereas if the amount used exceeds the range above, the molecular weight of the polymer obtained may be reduced, and the cohesive force of the adhesive is likely to decrease, failing in obtaining preferred characteristics in terms of adhesive property.

As the crosslinking agent used in this Embodiment, a polyfunctional acrylate monomer or the like is used and, examples thereof include bifunctional or higher functional alkyl acrylate monomers such as trimethylolpropane triacrylate, pentaerythritol tetraacrylate, 1,2-ethylene glycol diacrylate, 1,6-hexanediol diacrylate, and 1,12-dodecanediol diacrylate. The use amount of the polyfunctional acylate monomer varies depending on the number of the functional groups or the like and generally, the use amount is preferably from 0.01 to 5 parts by weight, and more preferably from 0.1 to 3 parts by weight, per 100 parts by weight of the total of the monomer containing an alkyl acrylate monomer as the main component and the polar group-containing copolymerizable monomer. When the polyfunctional acylate monomer is used in such a range, good cohesive force is maintained.

In addition, a crosslinking agent other than the above-described polyfunctional acrylate can be also used in combination according to the intended use of the pressure-sensitive adhesive. Examples of the crosslinking agent used in combination include conventionally-used crosslinking agents such as isocyanate crosslinking agents, epoxy crosslinking agents and aziridine crosslinking agents. Incidentally, in the present invention, an additive such as tackifier may be used, if desired.

As the light-transmitting release liner 7, a liner having a light transmittance of 50% or more is used in this Embodiment, whereby the required amount of light transmission can be achieved. The light-transmitting release liner 7 is preferably a liner having a light transmittance of 80% or more, and more preferably a liner having a light transmittance of 90% or more. The light-transmitting release liner 7 has heat resistance high enough to withstand the treatment in the first irradiation chamber 5 and, in the later-described Embodiment 2, also the treatment in the second irradiation chamber 6. The light-transmitting release liner 7 having such characteristics includes, for example, a polyester film. The irradiation dose of light transmitted by the light-transmitting release liner 7 is arbitrarily set according to the characteristics required for the pressure-sensitive adhesive layer or the like, and usually, the irradiation dose is preferably within the range of from 100 to 30,000 mJ/cm², more preferably within the range of from 1,000 to 10,000 mJ/cm², and still more preferably within the range of from 2,000 to 8,000 mJ/cm².

The wavelength of light transmitted through the light-transmitting release liner 7 is not particularly limited and is appropriately selected according to the kind or use of the photopolymerizable composition layer. For example, in the case where the photopolymerization initiator used for the reaction has an absorption band in the long-wavelength ultraviolet region (for example, 400 nm or more), a light-transmitting release liner having a high light transmittance at a wavelength in the periphery of the region of this absorption band may be selected. Alternately, in the case where it is intended to perform a photopolymerization reaction by using light in the visible region, a light-transmitting release liner having a high light transmittance in the visible region may be selected.

For example, in the case where the photopolymerizable composition layer is a pressure-sensitive adhesive layer, the light-transmitting release liner 7 preferably has a property of shielding a short-wavelength light. The reason is because when light including short-wavelength light is emitted, the releasability between the pressure-sensitive adhesive layer produced by a photopolymerization reaction and the support 1 may be reduced and this is disadvantageous in the case of a so-called double-sided adhesive sheet. Therefore, the short-wavelength light is shielded by the light-transmitting release liner 7. Specifically, the light-transmitting release liner 7 is preferably a film capable of shielding 90% or more, more preferably 93% or more, and still more preferably 95% or more, of the transmission of short-wavelength light (for example, wavelength of 300 nm or less).

Returning to Fig. 1, in the coating section 3, the photopolymerizable composition 4 is coated on both front surface (first principal surface) and back surface (second principal surface) of the support 1 unrolled from the support feed roll 2 to a predetermined width and a predetermined thickness in the width direction of the support 1. The coating section 3 is provided with, for example, a comma coater on the support 1 front surface side and a

(fountain) die coater on the support 1 back surface side. Incidentally, the photopolymerizable compositions 4 applied to the front surface and the back surface of the support 1 may be the same composition or may be different compositions.

In the coating section 3, the comma coater is provided with a light-transmitting release liner feed roll 10 of unrolling and feeding a light-transmitting release liner 7; a liquid feed tank 11 of feeding the photopolymerizable composition 4 to the light-transmitting release liner 7 unrolled from the light-transmitting release liner feed roll 10; a comma roll 12 of coating the photopolymerizable composition 4 fed from the liquid feed tank 11 on the light-transmittmg release liner 7; and a backup roll 13 of conveying the light-transmitting release liner 7 having coated thereon the photopolymerizable composition 4 to the front surface of the support 1.

In the coating section 3, the die coater is provided with, similarly to the front surface side, a light-transmitting release liner feed roll 10 of unrolling and feeding a light-transmitting release liner 7; a lip coater 14 of coating the photopolymerizable composition 4 on the light-transmitting release liner 7 unrolled from the light-transmitting release liner feed roll 10; and a backup roll 13 of conveying the light-transmitting release liner 7 having coated thereon the photopolymerizable composition 4 to the back surface of the support 1,

Further, the coating section 3 is provided with a pair of upper and lower coating rolls 15 of almost simultaneously laminating the light-transmitting release liners 7 having coated thereon the photopolymerizable composition 4 onto both surfaces of the support 1.

By almost simultaneously laminating the light-transmitting release liners 7 having coated thereon the photopolymerizable composition 4 onto both surfaces of the support 1 by means of a coating roll 15, the photopolymerizable composition 4 is coated on each surface of the support 1. Incidentally, the light-transmitting release liners 7 laminated onto the front surface and the back surface of the support 1 may have the same properties or may have different properties.

The configuration of the coating section 3 is not limited to the above-described comma coater or die coater and other coating systems such as reverse coater and gravure coater may be employed, and also the method for adjusting the thickness of the photopolymerizable composition 4 may be appropriately changed and performed according to respective coating systems.

In the first irradiation chamber 5, each of the photopolymerizable composition layers 4 applied to both surfaces of the support 1 is irradiated with light The first irradiation chamber 5 is provided with a first turnaround mechanism 16 of turning around the support 1 to move the support 1 in the direction opposite the transferring direction (the a direction shown in Fig. 1) of the support 1 unrolled from the support feed roll 2; a second turnaround mechanism 17 of turning around the support 1 to move the support 1 in the direction opposite the transferring direction of the support 1 turned around by the first turnaround mechanism 16; a plurality of first ultraviolet generating lamps 20 of irradiating the back surface as the facing surface of the support 1 with light until the first turnaround is performed by the first turnaround mechanism 16; and a plurality of second ultraviolet generating lamps 21 of irradiating the front surface as the facing surface of the support 1 with light after the final turnaround is performed by the second turnaround mechanism 17.

The first turnaround mechanism 16 is composed of three conveying rollers 16a, 16b and 16c. As shown in Fig. 2, the conveying rollers 16a, 16b and 16c are deployed to form a conveying path so that the support 1 being conveyed in one direction can be guided obliquely upward and then guided in the direction opposite the one direction.

That is, three conveying rollers 16a, 16b and 16c aligned along the support 1 conveying path form one group, and the inward (turnaround direction) angle θ formed by connecting the axial core of each of two conveying rollers 16a and 16c deployed before and after the conveying path relative to the central conveying roller 16b and the axial core of the conveying roller 16b with a straight line is preferably set to fall in the range of 90° ≤ θ < 180°. The angle θ is more preferably in the range of 110° ≤ θ < 170°.

If the angle θ is less than 90°, the area of the support 1 contacting with the conveying roller 16b may become larger than the contact area of the support 1 contacting with other conveying rollers 16a and 16c. That is, as the frictional resistance at the site of the support 1 contacting with the roller 16b becomes larger, the tension may be concentrated on the site, and, as a result, a folding crease may occur in the support 1, On the contrary, if the angle θ is 180° or more, the contact area of the support 1 contacting with the conveying rollers 16a and 16c may become larger than the contact area of the support 1 contacting with the conveying roller 16b. That is, the tension may be concentrated on the site of the support 1 contacting with the conveying rollers 16a and 16c, and, as a result, a folding crease may occur in the support 1.

Incidentally, the diameter of each of the conveying rollers 16a, 16b and 16c is preferably 300 mm or less, and more preferably 200 mm or less. The lower limit of the diameter is, for example, 10 mm, and the diameter is preferably from 30 mm to 200 mm. Also, the distance G between the support 1 conveyed in one direction and the support 1 turned around and conveyed in the opposite direction is preferably set to 10 mm or more, The upper limit of the distance G is, for example, 1000 mm, and the distance G is preferably from 10 mm to 300 mm.

Not only by setting of the angle formed by the conveying roller group, but by satisfying at least one condition of the angle above, the diameter of the conveying roller and the distance G between the supports, the contact area of the support 1 with each of the conveying rollers 16a, 16b and 16c can be reduced. That is, occurrence of a folding crease is suppressed by reducing the frictional resistance acting on each of the conveying rollers 16a, 16b and 16c during the turnaround of the support 1 and at the same time, by distributing the tension at the contact site.

The second turnaround mechanism 17 is composed of three conveying rollers 17a, 17b and 17c, similarly, and the diameter, arrangement and the like of the conveying rollers 17a, 17b and 17c may also be the same as those of the three conveying rollers 16a, 16b and 16c in the first turnaround mechanism 16.

Incidentally, the first and second ultraviolet generating lamps 20 and 21 constitute the irradiator of the present invention. As shown in Fig. 1, the light irradiator is preferably provided so as to emit light toward the support from outside of at least one of the uppermost stage and the downmost stage of the support that is turned around and conveyed along a serpentine course to establish multistaging.

Examples of the ultraviolet generating lamps used in the first irradiation chamber 5 include high-pressure discharge lamps such as metal halide lamp and high-pressure mercury lamp, low-pressure discharge lamps such as chemical lamp, black light lamp and insect-attracting fluorescent lamp, electrodeless UV lamps that emit light in a system of converting a microwave generated by a magnetron into a light energy, and ultraviolet wavelength LEDs (Light Emitting Diode) with a light-emitting element having an ultraviolet wavelength. Furthermore, two or more kinds of these lamps may be used in combination in the first irradiation chamber 5, and lamps having different characteristics are used in the first irradiation chamber 5 of this Embodiment.

Also, in the case where the photopolymerizable composition 4 is coated on the support 1 with using a light-transmitting release liner 7, when the conversion of the photopolymerizable composition 4 is low at the time of the support 1 being first turned around in the first irradiation chamber 5, that is, at the time of the support 1 being turned around by the first conveying roller 16, a monomer as an unreacted photopolymerizable composition 4 spreads out from the light-transmitting release liner 7 in some cases. In order to prevent this phenomenon, the illuminance of the first ultraviolet generating lamp 20 (depending on the case, also the illuminance of the second ultraviolet generating lamp 21) is preferably set such that the conversion of the photopolymerizable composition 4 becomes 20% or more at the time of the support 1 being first turned around. The illuminance of each of the first and second ultraviolet generating lamps 20 and 21 is more preferably set such that the conversion of the photopolymerizable composition 4 becomes 50% or more at the time of the support 1 being first turned around, and it is still more preferred to set the illuminance of each of the first and second ultraviolet generating lamps 20 and 21 such that the conversion becomes 70% or more at the time of the support 1 being first turned around. The illuminance of the first and second ultraviolet generating lamps 20 and 21 governs the conversion of the polymer obtained by the photopolymerization reaction and therefore, is preferably from 0.1 to 5,000 mW/cm², more preferably from 1 to 1,000 mW/cm², and further preferably from 1 to 100 mW/cm².

In order to more securely suppress the occurrence of a crease at the time of the support 1 being turned around, the film thickness on coating the photopolymerizable composition 4 is preferably 400 µm or less.

The apparatus of this Embodiment is controlled such that the conversion of the photopolymerizable composition layer 4 reaches at least 20% or more at the time of the support 1 being first turned around in the first irradiation chamber 5, that is, at the time of the support 1 being turned around by the first conveying roller 16. Whether the conversion of the photopolymerizable composition layer 4 has reached 20% or more is previously determined from a sample obtained by an irradiation test. That is, a sample in which a photopolymerizable composition 4 according to the specification of a product to be produced is coated on the support 1 is subjected to an irradiation test by appropriately changing respective conditions such as irradiation dose in the first irradiation chamber 5 (the first and second ultraviolet generating lamps 20 and 21). The conversion can be experimentally determined by measuring the sample after this test. The measurement of the conversion is performed, for example, by determining the percentage of residue (weight after heating/weight before heating × 100) after heating the sample in a hot air drier under the conditions of 130°C × 2 hours.

The separation section 8 is provided with a separation roller 23 of separating the light-transmitting release liner 7 located on the front surface side of the support 1; and a take-up roll 24 of rolling up the light-transmitting release liner 7 separated.

In the separation section 8, the light-transmitting release liner 7 located on the front surface side of the support 1, which is separated by the separation roller 23, is rolled up on the take-up roll 24 and at the same time, the support 1 and the light-transmitting release liner 7 located on the back surface side thereof are integrally rolled up in the support take-up section 9. At this time, a take-up correction device is preferably provided so as to prevent winding slippage. Thus, the light-transmitting release liner 7 located on the front side of the support 1 is separated from the support 1, providing a state where a pressure-sensitive adhesives 4A photopolymerized from the photopolymerizable composition layer 4 by the irradiation with light are provided on both surfaces of the support 1 and the light-transmitting release liner 7 is laminated to the back surface side of the support 1.

The present invention can be also implemented in the following mode.

### <Second Embodiment>

In this Embodiment, the apparatus differs from that of the First Embodiment in that a second irradiation chamber 6 adjacent to the first irradiation chamber 5 is provided. Accordingly, while only assigning the same reference numeral or sign to the same constituent element, the different constituent element is described in detail below.

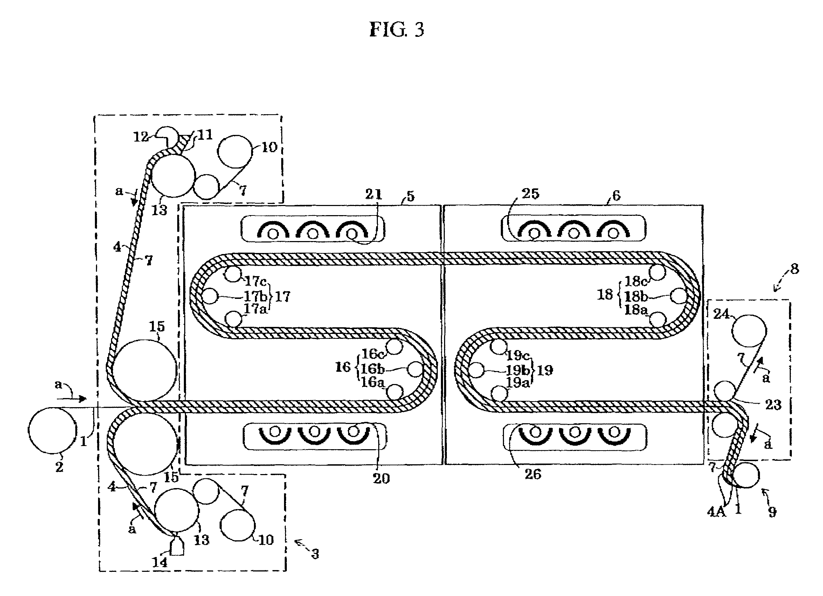

In the second irradiation chamber 6, as shown in Fig. 3, the support I conveying path is formed in line-symmetrical manner with respect to adjacent wall parts of the first irradiation chamber 5 and the second irradiation chamber 6. That is, the second irradiation chamber 6 is provided with a third turnaround mechanism 18 of turning around the support 1 to move the support 1 in the direction opposite the transferring direction of the support 1 conveyed from the first irradiation chamber 5; a fourth turnaround mechanism 19 of turning around the support 1 to move the support 1 in the direction opposite the transferring direction of the support 1 turned around by the third turnaround mechanism 18, a plurality of third ultraviolet generating lamps 25 of irradiating the front surface as the facing surface of the support 1 with light until the third turnaround is performed by the third turnaround mechanism 18, and a plurality of fourth ultraviolet generating lamps 26 of irradiating the back surface as the facing surface of the support 1 with light after the final turnaround is performed by the fourth turnaround mechanism 19.

The third turnaround mechanism 18 is composed of three conveying rollers 18a, 18b and 18c. The fourth turnaround mechanism 19 is composed of conveying rollers 19a, 19b and 19c. Incidentally, in this Embodiment, the configuration and arrangement of a group of conveying rollers in each of the third turnaround mechanism 18 and the fourth turnaround mechanism 19 are set the same as those in the first turnaround mechanism 16.

Examples of the ultraviolet generating lamp used in the second irradiation chamber 6 include high-pressure discharge lamps such as metal halide lamp and high-pressure mercury lamp, low-pressure discharge lamps such as chemical lamp, black light lamp and insect-attracting fluorescent lamp, electrodeless UV lamps that emit light in a system of converting a microwave generated by a magnetron into a light energy, and ultraviolet wavelength LEDs (Light Emitting Diode) having a light-emitting element with an ultraviolet wavelength. Furthermore, two or more kinds of these lamps may be used in combination in each irradiation chamber 5 or 6. That is, lamps having different characteristics may be also used in both irradiation chambers 5 and 6.

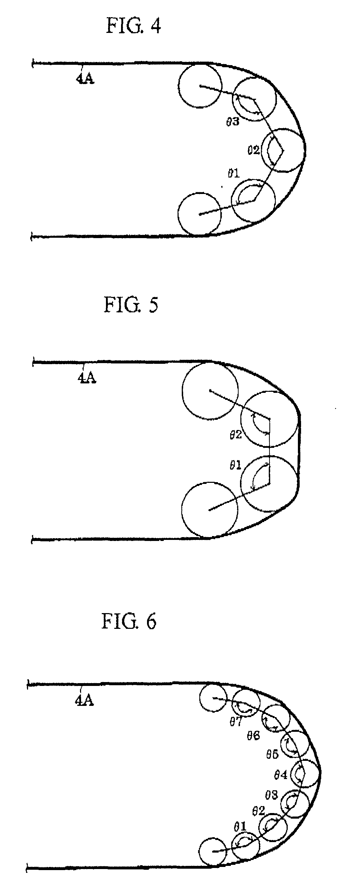

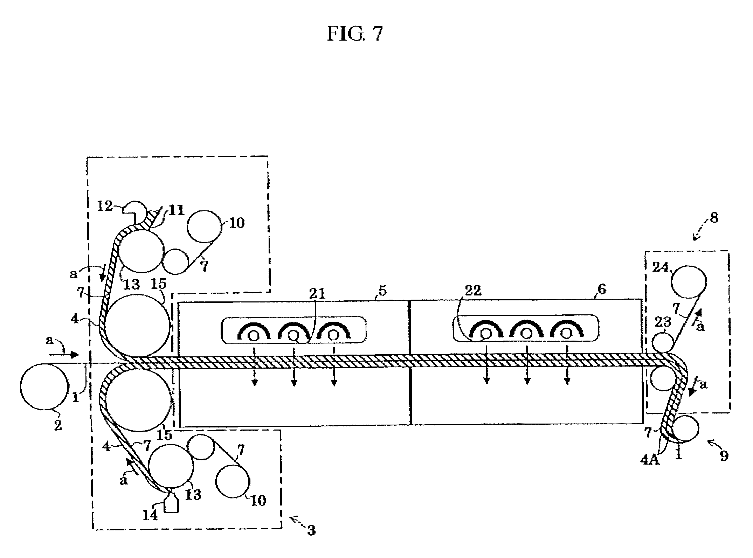

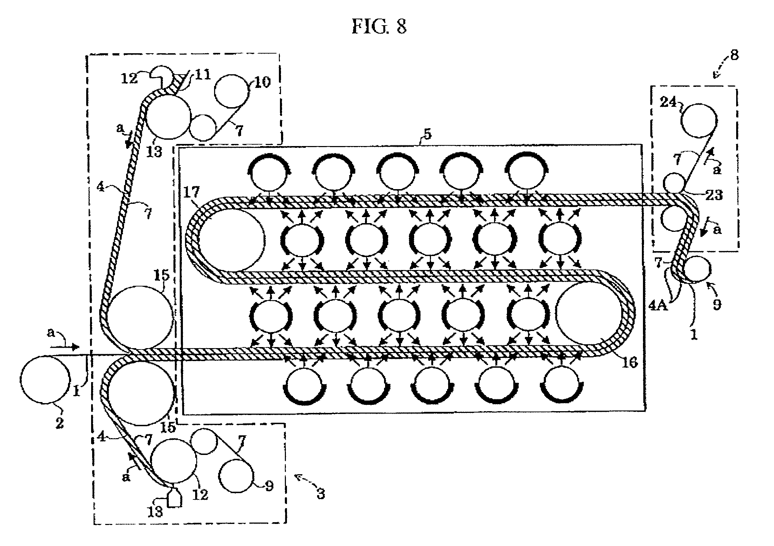

Specific Examples of the pressure-sensitive adhesive sheet obtained by using the apparatus shown in Fig. 1 or by using an apparatus having a configuration shown in Fig. 4 where the number of conveying rollers in turnaround mechanism in Fig. 1 is changed to 5, and Comparative Examples of the pressure-sensitive adhesive sheet obtained by using the conventional apparatuses shown in Figs. 7 and 8 are described below.

### <Specific Example>

In the photopolymerization, a 38-µm polyethylene film subjected to a silicone treatment was used as the light-transmitting release liner 7 of shielding the short-wavelength light.

The photopolymerizable composition was prepared as follows. Into a four-neck flask were charged 90 parts by weight of 2-ethylhexyl acrylate (2EHA) as the principal monomer with the main component being an alkyl acrylate monomer, 10 parts by weight of an acrylic acid (AA) as the polar group-containing copolymerizable monomer, and 0.05 parts by weight of 2,2-dimethoxy-2-phenylacetophenone as the photopolymerization initiator, and the mixture was exposed to an ultraviolet ray in a nitrogen atmosphere to obtain a partially photopolymerized syrup. With 100 parts by weight of this partially polymerized syrup, 0.04 parts by weight of 1,6-hexanediol diacrylate as the crosslinking agent was uniformly mixed to obtain a photopolymerizable composition.

### <Specific Example 1>

An experiment was performed by using the apparatus shown in Fig. 1. In the coating section 3, the photopolymerizable composition 4 obtained above was coated on a support 1 to give a thickness of 250 µm inclusive of the support 1. In the first irradiation chamber 5, 90 black lights were used for both of the first ultraviolet generating lamp 20 and the second ultraviolet generating lamp 21. The illuminance on the support 1 facing each of the first ultraviolet generating lamp 20 and the second ultraviolet generating lamp 21 was set to become 6 mW/cm².

Also, a roller having a diameter of 50 mm was used for the conveying roller constituting the first turnaround mechanism 16 and the second turnaround mechanism 17. Respective conveying rollers were provided such that the angle θ formed by connecting axial cores of three conveying rollers constituting the respective first and second turnaround mechanisms 16 and 17 became 95°.

Furthermore, the conveying speed (line speed) of the support 1 was set to 6 m/min. At this conveying speed, coating of the photopolymerizable composition on the support 1 and photopolymerization were performed. The conversion of the photopolymerizable composition was measured, and the evaluation of appearance failure in this Specific Example was obtained.

### <Specific Example 2>

In this Specific Example, an experiment was performed by using the same apparatus as in Specific Example 1. As for other setting conditions, the experiment was performed under the same conditions as in Specific Example 1 except that the thickness of the photopolymerizable composition 4 applied to the support I in the coating section 3 was changed. That is, in this Specific Example, the thickness of the photopolymerizable composition 4 applied to the support 1 was set to 300 µm. The conversion of the photopolymerizable composition in this setting of conditions was measured, and the evaluation of appearance failure in this Specific Example was obtained.

### <Specific Example 3>

This Specific Example was performed by using an apparatus where the number of conveying rollers for each of the first turnaround mechanism 16 and the second turnaround mechanism 17 in the apparatus shown in Fig. 1 was changed to 5 as shown in Fig. 4. As for other setting conditions, the experiment was performed under the same conditions as in Specific Example 1 except that the coating thickness of the photopolymerizable composition 4 set in Specific Example 1 and the angle θ formed by a group of conveying rollers in each of the turnaround mechanisms 16 and 17 were changed. That is, in this Specific Example, the thickness of the photopolymerizable composition 4 applied to the support 1 was set to 500 µm. Also, the angles θ1 to θ3 formed among a group of conveying rollers by making one set of 3 rollers were set to 125°. The conversion of the photopolymerizable composition in this setting of conditions was measured, and the evaluation of appearance failure in this Specific Example was obtained.

### <Specific Example 4>

In this Specific Example, an experiment was performed using substantially the same apparatus as in Specific Example 3. The experiment of this Specific Example was performed under the same conditions as in Specific Example 3 except for changing the angles θ1 1 to θ3 formed among a group of conveying rollers of each turnaround mechanism 16 or 17. That is, in this Specific Example, each angle θ of the angles θ1 to θ3 was set to 135°. The conversion of the photopolymerizable composition in this setting of conditions was measured, and the evaluation of appearance failure in this Specific Example was obtained.

### <Comparative Example 1>

An experiment was performed by using the conventional apparatus shown in Fig. 7. That is, a support was conveyed in a linear state from the first irradiation chamber 5 through the second irradiation chamber 6. In the coating section 3, the photopolymerizable composition 4 was applied to the support 1 to give a thickness of 300 µm inclusive of the support 1. For both of the first ultraviolet generating lamp 21 in the first irradiation chamber 5 and the second ultraviolet generating lamp 22 in the second irradiation chamber 6, 90 black lights were used. The illuminance was set to become 6 mW/cm² on the support 1.

Furthermore, the conveying speed (line speed) of the support 1 was set to 6 m/min. At this conveying speed, coating and photopolymerization were performed. The conversion of the photopolymerizable composition in this setting of conditions was measured, and the evaluation of appearance failure in this Comparative Example was obtained.

### <Comparative Example 2>

An experiment was performed by using the conventional apparatus shown in Fig. 8. That is, a support 1 was conveyed while making a turnaround by one conveying roller 16 or 17 in the first irradiation chamber 5. As for the rest, the experiment of Comparative Example 2 was performed under the same conditions as in Example 1 except for changing the thickness of the photopolymerizable composition 4 applied to the support 1 from that set in Example 1. More specifically, in this Comparative Example, the thickness of the photopolymerizable composition 4 applied to the support 1 was set to 150 µm. The conversion of the photopolynierizable composition in this setting of conditions was measured, and the evaluation of appearance failure in this Specific Example was obtained.

### <Comparative Example 3>

In Comparative Example 3, an experiment was performed under the same conditions as in Comparative Example 1 except for changing the thickness of the photopolymerizable composition 4 applied to the support 1 from that set in Comparative Example 1. That is, in this Comparative Example, the thickness of the photopolymerizable composition 4 applied to the support 1 was set to 500 µm. The conversion of the photopolymerizable composition in this setting of conditions was measured, and the evaluation of appearance failure in this Comparative Example was obtained.

### <Comparative Example 4>

In Comparative Example 4, an experiment was performed under the same conditions as in Comparative Example 1 except for changing the thickness of the photopolymerizable composition 4 applied to the support land the diameter of each of the conveying rollers 16 and 17 from that set in Comparative Example 1. That is, in this Comparative Example, the thickness of the photopolymerizable composition 4 applied to the support 1 was set to 200 µm, and a conveying roller having a diameter of 150 mm was used for the conveying rollers 16 and 17. The conversion of the photopolymerizable composition in this setting of conditions was measured, and the evaluation of appearance failure in this Comparative Example was obtained.

### <Comparative Example 5>

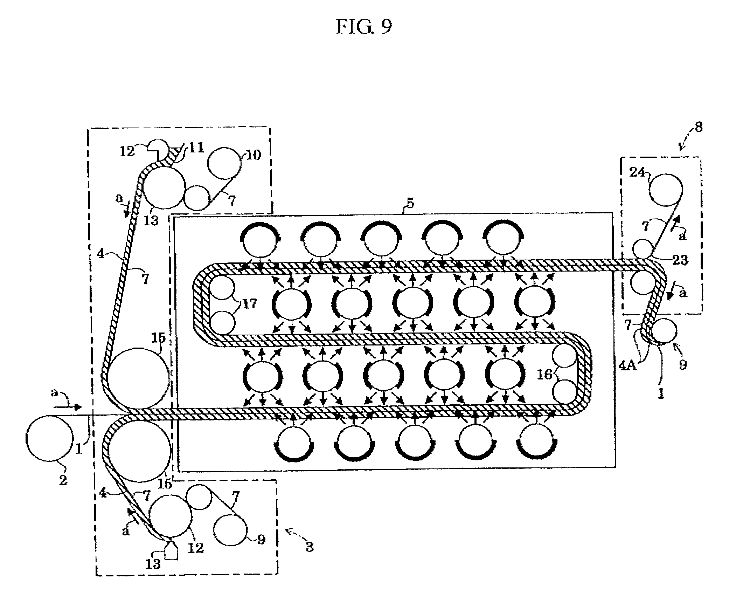

This Comprative Example was performed by using an apparatus where in the apparatus shown in Fig. 1, the number of conveying rollers of each of the first turnaround mechanism 16 and the second turnaround mechanism 17 was changed to 2 as shown in Fig. 9. As for other setting conditions, the experiment was performed under the same conditions as in Example 1 except for changing the coating thickness of the photopolymerizable composition 4 from that set in Example 1. More specifically, in this Comparative Example, the thickness of the photopolymerizable composition 4 applied to the support 1 was set to 200 µm. The conversion of the photopolymerizable composition in this setting of conditions was measured, and the evaluation of appearance failure in this Comparative Example was obtained.

With respect to each pressure-sensitive adhesive sheet according to Specific Examples and Comparative Examples above, the appearance quality and the measurement result of conversion of the photopolymerizable composition were as shown in Table 1 below.

**[Table 1]**

| | Number of Conveying Roll in Turnaround Mechanism | Roll Diameter (mm) | Angle (θ) | Glue Thickness (µm) | Appearance Failure | Conveying Speed (m/min) | Polymerization Ratio (%) |
|---|---|---|---|---|---|---|---|
| Specific Example 1 | 3 | 50 | 95 | 250 | none | 6 | 99 |
| Specific Example 2 | 3 | 50 | 95 | 300 | none | 6 | 99 |
| Specific Example 3 | 5 | 50 | 125 | 500 | none | 6 | 99 |
| Specific Example 4 | 5 | 50 | 135 | 500 | none | 6 | 99 |
| Comparative Example 1 | none | - | - | 300 | none | 6 | 95 |
| Comparative Example 2 | 1 | 50 | - | 150 | observed | 6 | 99 |
| Comparative Example 3 | 1 | 50 | - | 500 | observed | 6 | 99 |
| Comparative Example 4 | 1 | 150 | - | 200 | observed | 6 | 99 |
| Comparative Example 5 | 2 | 50 | 90 | 200 | observed | 6 | 99 |

The number of ultraviolet generating lamps used and the conveying speed are the same among Specific Examples 1 to 4 using the apparatus of the present invention and Comparative Example I using the conventional apparatus. That is, in the apparatus of the present invention, the photopolymerizable composition on the conveying path in each stage can be photopolymerized while conveying the support 1 along a serpentine course through a turnaround and transmitting light to the support 1 having formed thereon the photopolymerizable composition, so that even at the same conveying speed as in the conventional apparatus, the light irradiation time per unit area of the support 1 can be increased. In turn, as seen from Table 1, the conversion of the photopolymerizable composition can be raised while reducing the size of the apparatus.

Furthermore, comparing Specific Examples 1 to 4 using the apparatus of the present invention with Comparative Examples 2 to 5, an appearance failure due to a folding crease was not found in the appearance of the pressure-sensitive adhesive sheet produced by the apparatus of the present invention.

Incidentally, the present invention can be also implemented in the following modes.
(1) In the apparatus of the present invention above, it may be sufficient if the number of conveying rollers of each of the first turnaround mechanism 16 and the second turnaround mechanism 17 is 3 or more, and, for example, the number of conveying rollers of the turnaround mechanism may be appropriately changed to 4, 9 or the like as shown in Figs. 5 and 6. Also, the diameters of conveying rollers need not be all the same, and conveying rollers differing in the diameter may be combined. Incidentally, as for the conveying roller in such a modified example, similarly to Embodiment 1, three conveying rollers aligned along the support 1 conveying path form one group, and the inward (turnaround direction) angles θ1 1 to 97 formed by connecting the axial core of each of two conveying rollers deployed before and after the conveying path relative to the central conveying roller and the axial core of the basis conveying roller (central conveying roller among the respective three conveying rollers) with a straight line are set to fall in the range of 90° ≤ θ < 180°, and preferably in the range of 110° ≤ θ < 170°,
(2) The apparatus of the Embodiment above may have a configuration where in the configuration shown in Fig. 1, only either one of the ultraviolet generating lamp 20 on the upstream side of the conveying route and the ultraviolet generating lamp 21 on the downstream side is provided.

While the present invention has been described in detail with reference to the specific embodiments thereof, it will be apparent to one skilled in the art that various changes and modifications can be made therein without departing from the spirit and scope of the present invention.

The present application is based on the Japanese Patent Application No. 2012-260927 filed on November 29, 2012, and the entire contents thereof are incorporated herein by reference. All references cited herein are incorporated in their entirety.

### DESCRIPTION OF REFERENCE NUMERALS AND SIGNS

1: Support
2: Support feed roller
3: Coating section
4: Photopolymerizable composition (Photopolymerizable composition layer)
4A: Pressure-sensitive adhesive layer
5: First irradiation chamber
7: Light-transmitting release liner
8: Separation section
11: Liquid feed tank
16: First turnaround mechanism
16a to 16c: First conveying roller
17: Second turnaround mechanism
17a to 17c: Second conveying roller
20: First ultraviolet generating lamp
21: Second ultraviolet generating lamp

## Claims

1. A method for producing a photoreaction product sheet, comprising irradiating a photoreactive composition layer formed on a support with light emitted from a light irradiator to cause a reaction of the photoreactive composition layer, to thereby obtain a photoreaction product layer, wherein:
the photoreactive composition layer is a photopolymerizable composition layer having a light transparency, which is photopolymerized by light emitted from the light irradiator to provide a pressure-sensitive adhesive layer,
the photoreactive composition layer is formed on the support while conveying the support in one direction,
the support is turned around at least once so that the support before turnaround faces the support after turnaround by conveying the support in the direction opposite the foregoing one direction to make a conveying route of the support multistage traveling, and in the course of multistage traveling, the support is turned around while keeping contact with three or more conveying rollers at least during the first turnaround, and
light is emitted toward the support from the light irradiator to cause photopolymerization of the photoreactive composition layer formed on the support.

2. The method for producing a photoreaction product sheet according to claim 1, wherein
in each conveying roller group consisting of a set of three conveying rollers aligned along the conveying direction of the support, the central roller among the three conveying rollers is taken as a basis conveying roller, and
the inward angle formed by connecting the axial core of each of conveying rollers deployed before and after the basis conveying roller and the axial core of the basis conveying roller with a straight line is set to be from 90° to less than 180°.

3. The method for producing a photoreaction product sheet according to claim 1 or 2, wherein
the conveying roller has a diameter of 300 mm or less.

4. The method for producing a photoreaction product sheet according to any on of claims 1 to 3, wherein
a distance between the supports conveyed in the multistage traveling manner is 10 mm or more.

5. The method for producing a photoreaction product sheet according to any on of claims 1 to 4, wherein
the support has a light transparency and in the course of emitting light toward the support from the light irradiator, the photoreactive composition layer formed on the support and the support transmit light to cause photopolymerization of all photoreactive composition layers on the multistaged supports.

6. The method for producing a photoreaction product sheet according to any on of claims 1 to 5, wherein
the photoreactive composition layer is formed on both front surface and back surface of the support.

7. The method for producing a photoreaction product sheet according to any on of claims 1 to 6, wherein
the photoreactive composition layer formed on a light-transmitting release liner is laminated onto the support, and light is emitted toward the support in a state that the photoreactive composition layer is still covered with the light-transmitting release liner, to cause photopolymerization of the photoreactive composition layer.

8. The method for producing a photoreaction product sheet according to any on of claims 1 to 7, wherein
the reaction ratio of the photoreactive composition layer by light is 20% or more at the time of first turning around the support.

9. An apparatus for producing a photoreaction product sheet by irradiating a photoreactive composition layer formed on a support with light emitted from a light irradiator to cause a reaction of the photoreactive composition layer, to thereby obtain a photoreaction product layer, wherein:
the photoreactive composition layer is a photopolymerizable composition layer being photopolymerized by light emitted from the light irradiator to provide a pressure-sensitive adhesive layer, and
the apparatus comprises:
a coater of coating the photoreactive composition layer on the support having a light transparency while conveying the support in one direction,
a turnaround mechanism of turning around the support by three or more conveying rollers to convey the support in the direction opposite the foregoing one direction by making a turnaround at least once, and
an irradiator of emitting light on the support that is turned around and conveyed along a serpentine course to establish multistaging.

10. The apparatus for producing a photoreaction product sheet according to claim 9, wherein:
the support has a light transparency, and
the light irradiator emits light toward the support from outside of at least one of the uppermost stage and the downmost stage of the support that is turned around and conveyed along a serpentine course to establish multistaging.
